# EUROPEAN PATENT SPECIFICATION

(11) **EP 4 187 850 B1**
(45) Date of publication and mention of the grant of the patent: **04.09.2024**
(21) Application number: 22200879.9
(22) Date of filing: 11.10.2022
(51) Int. Cl.: H04L 9/40

(54) **MANAGING METHOD FOR WIRELESS CONNECTION BETWEEN COMMUNICATION TERMINAL AND MEASURING DEVICE**
VERWALTUNGSVERFAHREN FÜR DRAHTLOSE VERBINDUNG ZWISCHEN EINEM KOMMUNIKATIONSENDGERÄT UND EINER MESSVORRICHTUNG
PROCÉDÉ DE GESTION DE CONNEXION SANS FIL ENTRE UN TERMINAL DE COMMUNICATION ET UN DISPOSITIF DE MESURE

(30) Priority: 25.11.2021 KR 20210164707
(43) Date of publication of application: 31.05.2023
(73) Proprietor: 1Drop Inc., Gyeonggi-do 13217 (KR)
(72) Inventor: CHOI, Hoon Ki, Gwangju-si Gyeonggi-do, 12771 (KR); JANG, Sung Woo, Anyang-si Gyeonggi-do, 13979 (KR); RHEE, Joo Won, Seongnam-si Gyeonggi-do, 13562 (KR)
(74) Representative: advotec.

(56) References cited:
- US-A1- 2021 112 069

## Description

### BACKGROUND

### 1. Field of the Invention

The present disclosure relates to a method of controlling a communication terminal, and more particularly, to a method of managing a wireless connection between a communication terminal and a measuring device.

### 2. Discussion of Related Art

The contents described herein are intended to merely provide background information of embodiments set forth herein and should not be understood as necessarily constituting the related art.

With the spread of smart phones, various types of devices that can be connected to smart phones through wireless communication are being developed and sold. As a representative example, various types of devices equipped with a short range communication module using Bluetooth have been developed.

A similar device is for example disclosed in document US 2021/112069 A1.

Devices can be simultaneously connected in up to 1:7 or 1:15 correspondence according to a version of a Bluetooth communication module. However, there is a case in which a device should be connected to another device in 1:1 correspondence according to the usage of the device. In this case, when there is an existing wireless connection, a method of managing whether to maintain the existing wireless connection or establish a new connection when a device attempts to connect wirelessly may be needed.

### SUMMARY OF THE INVENTION

The present disclosure is directed to providing a management method of stably establishing or canceling wireless communication between a plurality of communication terminals and a certain measuring device.

The present disclosure is not limited thereto and aspects thereof that are not described above will be apparent to those of ordinary skill in the art from the following description.

According to an aspect of the present disclosure, a measuring device connection management method includes (a) when a connection permission request signal for connecting to a certain measuring device through wireless communication is received from a first communication terminal, transmitting, by a controller, a connection possible signal to the first communication terminal and updating information about a communication terminal connected to the measuring device through wireless communication (hereinafter referred to as measuring device connection state information) with information about the first communication terminal; (b) when the connection permission request signal for connecting to the measuring device through wireless communication is received from a second communication terminal, transmitting, by the controller, a disconnection request signal to the first communication terminal; and (c) when a disconnection confirmation signal is received from the first communication terminal, transmitting, by the controller, the connection possible signal to the second communication terminal and updating the measuring device connection state information with information about the second communication terminal.

In an embodiment of the present disclosure, (a) may include updating, by the controller, the measuring device connection state information with the information about the first communication terminal when a connection completion signal is received from the first communication terminal, and (c) may include updating, by the controller, the measuring device connection state information with the information about the second communication terminal when a connection completion signal is received from the second communication terminal.

In an embodiment of the present disclosure, (a) may further include receiving, by the controller, information about a measurement start time or an estimated measurement end time from the first communication terminal and updating the measuring device connection state information with the received information.

In an embodiment of the present disclosure, (b) may include transmitting, by the controller, a connection impossible signal to the second communication terminal when the connection permission request signal for connecting to the measuring device through wireless communication is received from the second communication terminal before a preset operation time elapses from a measurement start time of the first communication terminal or before the estimated measurement end time, which is included in the measuring device connection state information.

In an embodiment of the present disclosure, (b) may further include transmitting, by the controller, measurement start time information of the first communication terminal or estimated measurement end time information to the second communication terminal.

In an embodiment of the present disclosure, (c) may include transmitting, by the controller, the connection possible signal to the second communication terminal and updating the measuring device connection state information with the information about the second communication terminal when the disconnection confirmation signal is not received within a preset response time.

In an embodiment of the present disclosure, the method may further include, before (a), storing, by the controller, a list of connectable communication terminals, which is information about communication terminals capable of being connected to the specific measuring device. In this case, when the connection permission request signal for connecting to the measuring device through wireless communication is received from the second communication terminal, (b) may include determining, by the controller, whether the second communication terminal is included in the list of connectable communication terminals and transmitting the disconnection request signal to the first communication terminal when the second communication terminal is included in the list of connectable communication terminals.

In an embodiment of the present disclosure, (a) may include transmitting, by the controller, a connection permission confirmation request signal for the first communication terminal to a master communication terminal when the connection permission request signal for connecting to the measuring device through wireless communication is received from the first communication terminal, and transmitting the connection possible signal to the first communication terminal when a connection permission approval signal for the first communication terminal is received from the master communication terminal, and (b) may include transmitting, by the controller, a connection permission confirmation request signal for the second communication terminal to the master communication terminal when the connection permission request signal for connecting to the measuring device through wireless communication is received from the second communication terminal, and transmitting a disconnection request signal to the first communication terminal when a connection permission approval signal for the second communication terminal is received from the master communication terminal.

In this case, (c) may include transmitting, by the controller, a forcible connection termination confirmation request signal for the first communication terminal to the master communication terminal when the disconnection confirmation signal is not received from the first communication terminal within a preset response time, and transmitting the connection possible signal to the second communication terminal and updating the measuring device connection state information with the information about the second communication terminal when a forcible connection termination permission signal is received from the master communication terminal.

The measuring device connection management method according to the present disclosure may be embodied as a computer program created to perform operations of the measuring device connection management method in a computer and recorded on a computer-readable recording medium.

According to another aspect of the present disclosure, a measuring device connection management server includes a memory storing information about a communication terminal connected to a certain measuring device through wireless communication (hereinafter referred to as measuring device connection state information), and a controller configured to transmit a connection possible signal to a first communication terminal and update the measuring device connection state information with information about the first communication terminal when a connection permission request signal for connecting to the measuring device through wireless communication is received from the first communication terminal, transmit a disconnection request signal to the first communication terminal when the connection permission request signal is received from a second communication terminal, and transmit the connection possible signal to the second communication terminal and update the measuring device connection state information with information about the second communication terminal when a disconnection confirmation signal is received from the first communication terminal.

Other details of the present disclosure are provided in the detailed description and drawings.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a reference diagram for helping the understanding of a diagnostic system according to the present disclosure;
FIG. 2 is a schematic block diagram of a configuration of an amplifier according to the present disclosure;
FIG. 3 is a diagram illustrating an example of a change in color of a tube;
FIG. 4 is a table showing examples of an analysis result according to a color of a tube;
FIG. 5 is a schematic block diagram of a measuring device connection management system according to an embodiment of the present disclosure;
FIG. 6 is a diagram illustrating the flow of signals in a measuring device connection management method according to a first embodiment of the present disclosure;
FIG. 7 is a diagram illustrating the flow of signals in a measuring device connection management method according to a second embodiment of the present disclosure;
FIG. 8 is a diagram illustrating the flow of signals in a measuring device connection management method according to a third embodiment of the present disclosure;
FIG. 9 is a diagram illustrating the flow of signals in a measuring device connection management method according to a fourth embodiment of the present disclosure;
FIG. 10 is a diagram illustrating the flow of signals in a measuring device connection management method according to a fifth embodiment of the present disclosure;
FIG. 11 is a schematic block diagram of a measuring device connection management system according to another embodiment of the present disclosure;
FIG. 12 is a diagram illustrating the flow of signals in a measuring device connection management method according to a sixth embodiment of the present disclosure; and
FIG. 13 is a diagram illustrating the flow of signals in a measuring device connection management method according to a seventh embodiment of the present disclosure.

### DETAILED DESCRIPTION OF EXEMPLARY EMBODIMENTS

Hereinafter, embodiments set forth herein will be described in detail with reference to the accompanying drawings, and the same or similar components are assigned the same reference numbers even in different drawings and are not redundantly described herein. Terms "unit" and the like used to describe elements of the following description are only intended or interchangeably used to facilitate the making of the specification and should not be understood as having different meanings or functions. The related art is not described in detail when it is determined that the description thereof would obscure the subject matter of the embodiments of the present disclosure set forth herein in describing the embodiments. In addition, the accompanying drawings are only provided to help understand the embodiments, and it should be understood that the technical idea set forth herein is not limited by the accompanying drawings and includes all changes, equivalents, or substitutes included in the scope of the present disclosure.

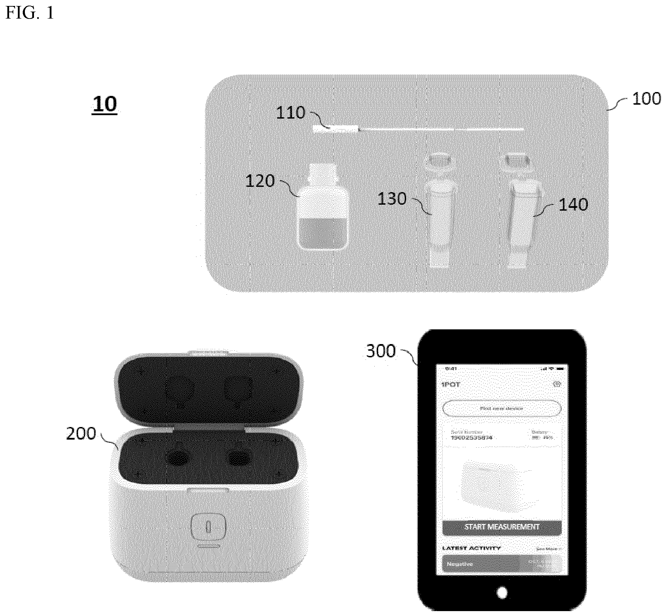

FIG. 1 is a reference diagram for helping the understanding of a diagnostic system according to the present disclosure.

Referring to FIG. 1, a diagnostic system 10 according to the present disclosure may include a tester 200 and a communication terminal 300.

The tester 200 is a device for performing a test on a sample collected from a respiratory organ. The tester 200 may be a molecular diagnostic device or an antigen diagnostic device. In the present specification, the measuring device 200 for performing a test on a sample by a molecular diagnosis method is provided as an example of the tester 200. The molecular diagnosis method is a method of extracting deoxyribonucleic acid (DNA) or ribonucleic acid (RNA) from a sample (saliva, blood or the like) of a human infected with a virus or bacteria using gene amplification technology and amplifying the extracted DNA or RNA to check whether he or she is infected with a disease. There are various types of the gene amplification method such as a polymerase chain reaction (PCR), a reverse transcription (RT)-PCR, and loop-mediated isothermal amplification (LAMP). In the present specification, a measuring device 200 configured to measure whether a patient who is a suspected of being infected with SARS-CoV-2 is infected with SARS-CoV-2 by amplifying the SARS-CoV-2 gene (S gene or N gene) of a sample collected from the patient's nasopharynx or nasal cavity by LAMP will be described as an example. However, the above example is not intended to limit a tester to the molecular diagnosis method or LAMP.

A test kit may be necessary to conduct a test on a sample using the measuring device 200 according to the present disclosure. The test kit refers to a tool, a reagent and consumables necessary to conduct a test and may be sealed and provided in a pouch 100.

Referring to FIG. 1, a swab 110, a sample tube 120, a test tube 130, and a control tube 140 may be provided. The swab 110, the sample tube 120, the test tube 130, and the control tube 140 may be manufactured for one-time use by one person to be tested. Accordingly, the swab 110, the sample tube 120, the test tube 130, and the control tube 140 may be replaced with new ones for each test to additionally or repeatedly perform the test. In addition, the swab 110, the sample tube 120, the test tube 130, and the control tube 140 may be manufactured in a sterile state, and sealed and distributed in the pouch 100.

The swab 110 is a tool (sample collection tool) to be used for a testee to collect a sample. The swab 110 may have a length and thickness sufficient to collect a sample.

The sample tube 120 may contain a nucleic acid extraction solution. Specifically, the nucleic acid extraction solution may include a buffer solution, a nonionic surfactant, a kosmotropic salt, and an indicator.

In the nucleic acid extraction solution, the buffer solution may be a Tris-buffer solution. Specifically, the buffer solution may be Tris-HCl of pH 8 to pH 9 or of pH 8.3 to pH 8.6. The buffer solution may have a concentration of 1.0 mM to 2 mM.

In the nucleic acid extraction solution, the nonionic surfactant may be a Tween type surfactant. Specifically, the nonionic surfactant may be Tween 20. The nonionic surfactant may have a concentration of 0.05 vol% to 0.5 vol% or 0.07 vol% to 0.2 vol%.

In the nucleic acid extraction solution, the kosmotropic salt may include at least one selected from the group consisting of ammonium sulfate, potassium chloride, and magnesium sulfate. Specifically, the kosmotropic salt may include all of ammonium sulfate, potassium chloride, and magnesium sulfate. In this case, ammonium sulfate may have a concentration of 5 mM to 20 mM or 7.5 mM to 15 mM. Potassium chloride may have a concentration of 20 mM to 100 mM or 40 mM to 60 mM. Magnesium sulfate may have a concentration of 3 mM to 10 mM or 4 mM to 8 mM.

In the nucleic acid extraction solution, the indicator may include at least one selected from the group consisting of Cresol RED and Phenol RED, but embodiments are not limited thereto and an appropriate indicator may be used according to the purpose.

The nucleic acid extraction solution may further include an additive such as guanidine. When the nucleic acid extraction solution further includes guanidine, guanidine may have a concentration of 10 mM to 80 mM, or 30 mM to 50 mM.

The test tube 130 and the control tube 140 may each include a primer for LAMP. The primer included in the test tube 130 and the primer included in the control tube 140 are different from each other. The primer included in the test tube 130 is a primer for amplifying the nucleic acid of a virus that is suspected of infecting with a person, and the primer included in the control tube 140 is a primer for amplifying nucleic acid that may be collected from ordinary people.

The test tube 130 and the control tube 140 may further include 0.1 to 1 vM primer mix, 32KU/T Bst polymerase, a 12.5 mU/T RNase inhibitor, 20 to 200 uM dNTPs, 20 vg/T BSA, 1.2 vg/T trehalose, 1.6 vg sample buffer, etc.

The measuring device 200 may conduct a test on a sample while communicating with the communication terminal 300. The measuring device 200 may be configured such that a lid therein is opened or closed, and a space for accommodating the test tube 130 and the control tube 140 therein may be formed in the measuring device 200 when the lid is opened. According to an embodiment of the present disclosure, the test tube 130 and the control tube 140 may be formed in different shapes (e.g., a cylindrical shape and a quadrangular tube shape) to be easily differentiated from each other, and a space corresponding to the shapes of the test tube 130 and the control tube 140 may be formed in the measuring device 200.

Meanwhile, the measuring device 200 is capable of conducting a test on a sample by LAMP and thus may include components necessary for LAMP.

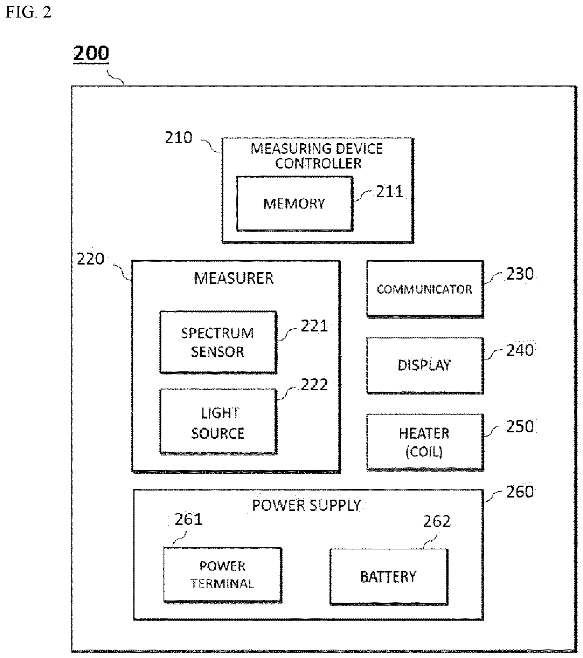

FIG. 2 is a schematic block diagram of a configuration of an amplifier according to the present disclosure.

Referring to FIG. 2, a measuring device 200 according to the present disclosure may include a measuring device controller 210, a measurer 220, a communicator 230, a display 240, a heater 250, and a power supply 260.

The measuring device controller 210 may control a process necessary for performing a test on a sample by LAMP. When the measuring device controller 210 can output a signal for controlling each component included in the measuring device 200, desired processing such as calculation, storing, handling, etc. is possible by receiving a signal from each component.

The measurer 220 may measure the test tube 130 and the control tube 140 according to a process of conducting a test on a sample. As will be described in more detail below, colors of solutions included in the test tube 130 and the control tube 140 may change as a nucleic acid is amplified according to the presence/absence of the nucleic acid. The measurer 220 may measure the colors of the test tube 130 and the control tube 140 and output a signal indicating the measured colors to the controller 210. To this end, the measurer 220 may include a spectrum sensor 221 and/or a light source 222.

The communicator 230 may allow data to be transmitted and received between the measuring device 200 and the communication terminal 300. The communicator 230 may establish wired communication and/or wireless communication, and data may be transmitted and received according to a preset communication protocol. Preferably, the communicator 230 may be a short range communication module for short range communication. The short range communication module may support short range communication using at least one of Bluetooth^{™}, Radio Frequency Identification (RFID), Infrared Data Association (IrDA), Ultra-Wideband (UWB), ZigBee, Near-Field Communication (NFC), Wireless-Fidelity (Wi-Fi), Wi-Fi Direct, and Wireless Universal Serial Bus (Wireless USB).

The display 240 may display status information and operation information of the measuring device 200. The display 240 may include two light-emitting diodes (LEDs) installed on a front surface of the measuring device 200. A first LED may display a communication connection state between the measuring device 200 and the communication terminal 300, and a second LED may display a charge state and a normal operation state of the measuring device 200.

The heater 250 may heat the test tube 130 and the control tube 140. The heater 250 may be configured as a coil to receive power from the power supply 260 and convert the power into heat energy according to a control signal from the measuring device controller 210. The coil may have a length and a resistance sufficient to heat the test tube 130 and the control tube 140 to a preset temperature. According to an embodiment of the present disclosure, the heater 250 may further include a temperature sensor (not shown). The measuring device controller 210 may output a signal for controlling the operation of the heater 250 according to a temperature signal output from the temperature sensor.

The power supply 260 may supply power required to operate the components included in the measuring device 200 according to the present disclosure. To this end, the power supply 260 may include a power terminal 261 and a battery 262. The battery 262 may be a primary battery or a secondary battery, and preferably, the secondary battery. The power terminal 261 is an interface for connection to an external power supply source (e.g., a commercial electrical grid, a charging battery or the like), and may be configured as, for example, a USB input/output terminal. The power supply 260 may charge the battery 262 with power supplied through the power terminal 261. Power charged in the battery 262 may be used to perform a test on a sample, or power may be directly received from the power terminal 261 and used.

The communication terminal 300 of the present disclosure may be a communication terminal capable of transmitting and receiving data, e.g., a smart phone, a laptop computer, a digital broadcasting terminal, a personal digital assistant (PDA), a portable multimedia player (PMP), a navigation system, a slate PC, a tablet PC or an Ultrabook, or a wearable device, e.g., a smart watch, smart glasses or a head-mounted display (HMD). An application necessary for performing a test on a sample may be installed in the communication terminal 300 according to the present disclosure.

The communication terminal 300 may also include a communicator to transmit data to and receive data from the communicator 230 of the measuring device 200, and in this case, a communication protocol included in the communication terminal 300 is the same as a communication protocol of the communicator 230 of the measuring device 200. In the present specification, it will be described that, for example, data communication may be established between the measuring device 200 and the communication terminal 300 using Bluetooth^{™} used for a short-range communication module. Meanwhile, the communication terminal 300 may transmit data to and receive data from a communication terminal other than the measuring device 200 and/or a wireless communication system and/or an external server. The communicator of the communication terminal 300 may further include a mobile communication module, a wireless Internet module, or a short-range communication module.

A method of diagnosing whether a user is infected with a virus using the measuring device 200 according to the present disclosure will be described below. In this case, it is assumed that a battery included in the measuring device 200 is in a fully charged state and an application program necessary for performing a test on a sample is installed in the communication terminal 300.

First, the measuring device 200 may be turned on by pressing a (power) button on a front side of the measuring device 200. Next, an application installed in the communication terminal 300 may be executed to connect the measuring device 200 and the communication terminal 300.

Next, a testee may collect a sample by pushing the swab 110 into his or her nasopharynx inside the nose. After the sample is collected, the swab 110 may be put into the sample tube 120, and the sample tube 120 is shaken sufficiently about 20 to 30 times to mix the sample with a solution in the sample tube 120.

Next, a preset amount (e.g., 50 µl) of the sample mixed with the solution in the sample tube 120 by sufficiently shaking the sample tube 120 may be put into the test tube 130 and the control tube 140. The test tube 130 and the control tube 140 are mounted in their positions in the measuring device 200, and the lid of the measuring device 200 is closed. When the lid of the measuring device 200 is closed, driving may be started at a preset temperature for a preset time. In this case, the remaining time among the total time may be displayed on a display screen of the communication terminal 300.

When the preset time elapses, the display screen of the communication terminal 300 may be switched to a driving completion screen on which a reading result is displayed. In this case, the measurer 220 of the measuring device 200 may output a signal indicating a change in colors of the test tube 130 and the control tube 140. When the signal output from the measurer 220 can be stored in a memory 211 of the measuring device controller 210, the measuring device controller 210 may transmit data on the signal stored in the memory 211 to the communication terminal 300 through the communicator 230.

The communication terminal 300 may determine whether the user is infected with a virus using data on the change in colors of the test tube 130 and the control tube 140, and display a result of the determination on the screen.

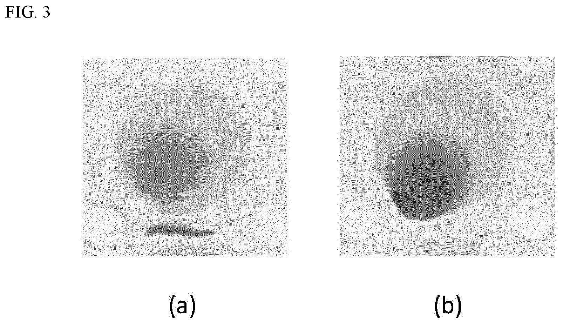

FIG. 3 is a diagram illustrating an example of a change in color of a tube.

Referring to FIG. 3A, a color of a solution in a tube is yellow, and referring to FIG. 3B, a color of the solution in the tube is red. The test tube 130 and the control tube 140 may contain a reagent, the color of which changes according to pH, and in the examples illustrated in FIG. 3, "yellow" may represent "positive" indicating the presence of a nucleic acid to be detected, and "red" may represent "negative" indicating the absence of a nucleic acid to be detected.

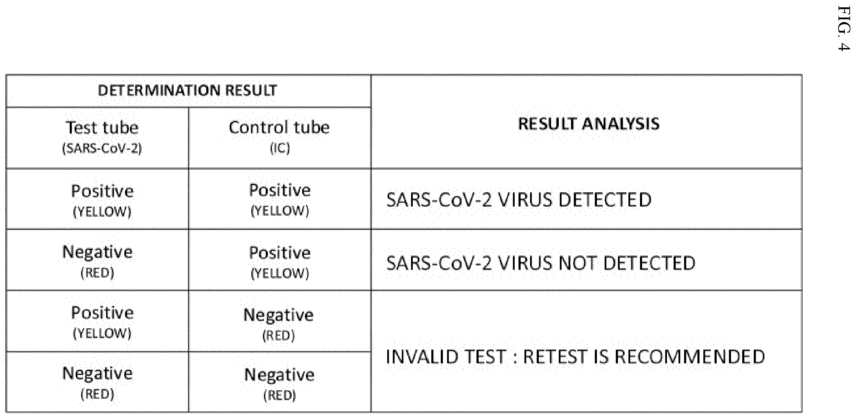

FIG. 4 is a table showing examples of an analysis result according to a color of a tube.

Referring to the table of FIG. 4, it may be understood that when a color of a control tube is measured to be yellow, a sample was successfully extracted and a LAMP reaction was also successfully performed, and thus, a measurement result is reliable. On the other hand, it may be understood that when the color of the control tube is measured to be red, the sample was not successfully extracted or the LAMP reaction was not successfully performed, and thus, the measurement result is not reliable. In this case, a test is not valid and thus it may be recommended to conduct the test again.

Meanwhile, it may be understood that when the color of the control tube is yellow and a color of a test tube is yellow, the COVID-19 virus is detected. That is, it may be understood that a testee has been infected with the COVID-19 virus. Meanwhile, it may be understood that when the color of the control tube is yellow and the color of the test tube is red, the COVID-19 virus is not detected. That is, it may be understood that the testee is not infected with the COVID-19 virus. It will be obvious that the colors of the test tube 130 and the control tube 140 may variously change according to the types of reagents included in the test tube 130 and the control tube 140.

It is necessary to wirelessly connect the measuring device 200 and the communication terminal 300 to measure whether a testee is infected with the virus using a diagnostic system according to the present disclosure. However, the examples described above with reference to FIGS. 1 to 4 are based on an assumption that there is 1: 1 correspondence between the measuring device 200 and the communication terminal 300. One measuring device 200 may be shared by a plurality of users according to a usage environment. For example, there are a case in which one measuring device 200 is purchased for the use of family members, a case in which one measuring device 200 is purchased for the use of company employees, a case in which one measuring device 200 is purchased and used in each classroom of a school or kindergarten, etc. In such cases, only one communication terminal should be wirelessly connected to the measuring device 200, and wireless connection of another communication terminal to the measuring device 200 is possible after the wireless connection with the communication terminal is canceled. In addition, while whether a user is infected with the COVID-19 virus is measured, the measuring device 200 should not be wirelessly connected to another user's communication terminal. As described above, there is a need for a managing method of performing or canceling a wireless communication connection when there is one measuring device and a plurality of communication terminals. A measuring device connection management method according to the present disclosure will be described with reference to the accompanying drawings.

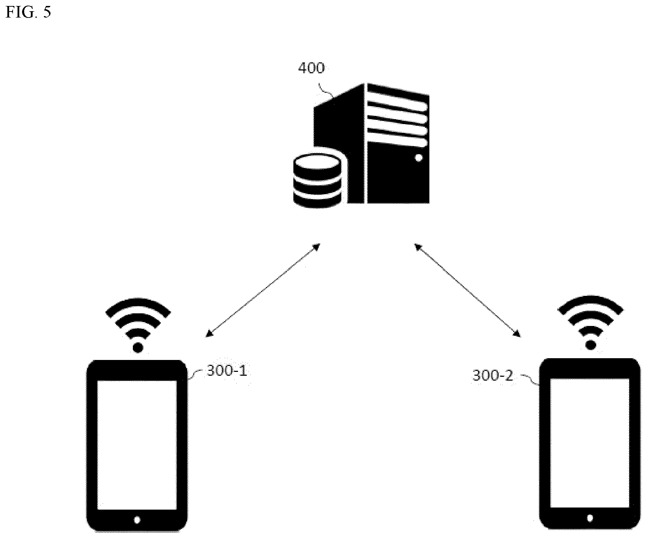

FIG. 5 is a schematic block diagram of a measuring device connection management system according to an embodiment of the present disclosure.

Referring to FIG. 5, the measuring device connection management system according to an embodiment of the present disclosure may include a first communication terminal 300-1, a second communication terminal 300-2, and a measuring device connection management server 400. The first communication terminal 300-1 and the second communication terminal 300-2 are substantially the same as the communication terminal 300 described above with reference to FIG. 1. However, the first communication terminal 300-1 and the second communication terminal 300-2 are different communication terminals, and for convenience of description, a communication terminal wirelessly connected to the measuring device 200 first will be referred to as a "first communication terminal" and a communication terminal wirelessly connected to the measuring device 200 afterward will be referred to as a "second communication terminal." When a communication terminal attempts to wirelessly connect to the measuring device 200 while the second communication terminal 300-2 is wirelessly connected to the measuring device 200, the second communication terminal 300-2 may be the "first communication terminal." That is, the terms "first" and "second" used herein are only intended to distinguish different communication terminals from each other and should not be understood to mean priority or a concept of higher and lower ranks.

The measuring device connection management server 400 may include a memory for storing data (or information) and a controller for performing a measuring device connection management method according to the present disclosure. The controller may include a processor, an application-specific integrated circuit (ASIC), other chipsets, a logic circuit, a register, a communication modem, a data processing device, etc., which are known in the art to which the present disclosure pertains, to perform calculation and execute various types of control logic. When a control logic as described above is implemented as software, the controller may be implemented as a set of program modules. In this case, the program module may be stored in the memory and executed by a processor.

Meanwhile, the measuring device connection management server 400 may include a database storing data for managing all sold measuring devices or measuring devices requiring connection management. In the present specification, measuring device connection management performed by the controller of the measuring device connection management server 400 will be described below focusing on a situation in which different communication terminals 300-1 and 300-2 attempt to connect to one measuring device 200. Accordingly, in a measuring device connection management method according to the present disclosure, a method of managing the measuring device 200 may equally apply to all measuring devices, the data of which is stored in the database.

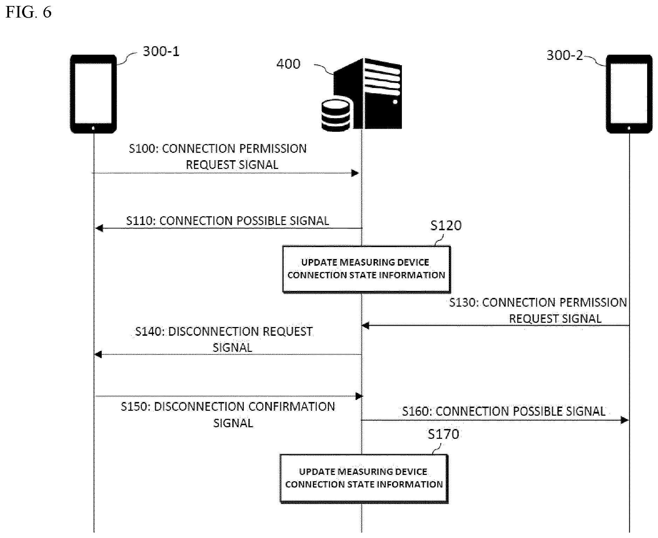

FIG. 6 is a diagram illustrating the flow of signals in a measuring device connection management method according to a first embodiment of the present disclosure.

Referring to FIG. 6, in operation S 100, the first communication terminal 300-1 may transmit a connection permission request signal to the measuring device connection management server 400. Here, the "connection permission request signal" should be understood to mean a signal transmitted from the communication terminal 300 to the measuring device connection management server 400 for wireless connection with a measuring device 200. The connection permission request signal may include unique information identifying the measuring device 200.

Next, in operation S110, when the controller of the measuring device connection management server 400 receives a connection permission request signal for connecting to a specific measuring device through wireless communication from the first communication terminal 300-1, the controller may transmit a connection possible signal to the first communication terminal 300-1. Here, the "connection possible signal" is a signal indicating that the specific measuring device 200 corresponding to unique information included in the connection permission request signal is currently connectable through wireless connection in response to the connection permission request signal.

Next, in operation S120, the controller of the measuring device connection management server 400 may update measuring device connection state information with information about the first communication terminal 300-1. As used herein, the term "measuring device connection state information" refers to information about the communication terminal 300 connected to the specific measuring device 200 through wireless communication. The measuring device connection state information may include information about whether there is a currently wirelessly connected communication terminal, identification information of the connected communication terminal, a connection time, etc. In this case, the controller of the measuring device connection management server 400 updates the measuring device connection state information with information about wireless communication between the first communication terminal 300-1 and the specific measuring device 200.

Thereafter, it is assumed that a user of the second communication terminal 300-2 attempts to establish wireless communication between the second communication terminal 300-2 and the specific measuring device 200 so as to use the specific measuring device 200. In this case, in operation S130, the second communication terminal 300-2 may transmit a connection permission request signal to the measuring device connection management server 400.

When the controller of the measuring device connection management server 400 receives a connection permission request signal for connection to the specific measuring device 200 through wireless communication from the second communication terminal 300-2, it can be seen through the measuring device connection state information that there is a communication terminal connected to the specific measuring device 200 and the connected communication terminal is the first communication terminal 300-1. Accordingly, in operation S140, the controller of the measuring device connection management server 400 may transmit a disconnection request signal to the first communication terminal 300-1. When a connection permission request signal is received from the second communication terminal 300-2, it is not possible to determine whether the user of the first communication terminal 300-1 has finished or is still using the specific measuring device 200. Therefore, as used herein, the term "disconnection request signal" is a signal for inquiring whether to cancel the wireless connection of a currently wirelessly connected communication terminal and permit wireless connection of a subsequent communication terminal.

In the present example, it is assumed that the user of the first communication terminal 300-1 has completed the use of the specific measuring device 200. In this case, the first communication terminal 300-1 may cancel the wireless connection with the specific measuring device 200 and transmit a disconnection confirmation signal to the measuring device connection management server 400 in operation S150. Here, the "disconnection confirmation signal" is a signal indicating cancelation of the wireless connection in response to the disconnection request signal.

In operation S160, when the disconnection confirmation signal is received from the first communication terminal 300-1, the controller of the measuring device connection management server 400 may transmit a connection possible signal to the second communication terminal 300-2. Then, in operation S170, the controller of the measuring device connection management server 400 may update the measuring device connection state information with information about the second communication terminal 300-2. That is, the measuring device connection state information is changed to indicate that wireless communication is established between the second communication terminal 300-2 and the measuring device 200.

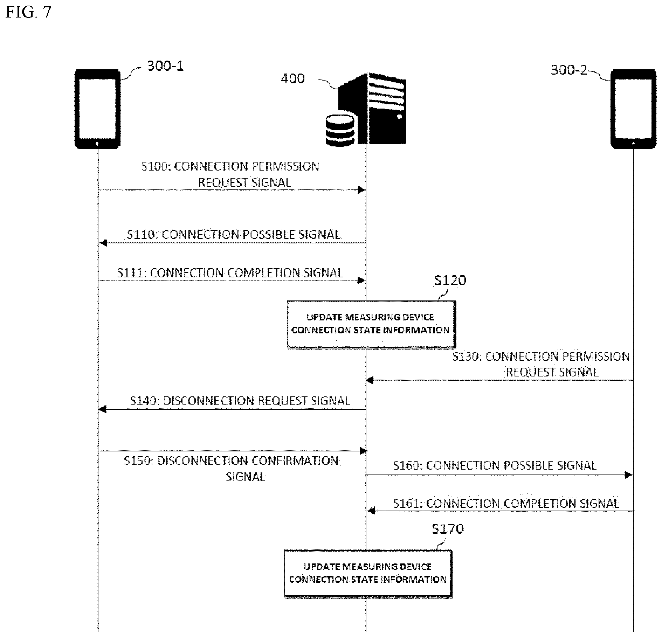

FIG. 7 is a diagram illustrating the flow of signals in a measuring device connection management method according to a second embodiment of the present disclosure.

The embodiment of FIG. 7 is substantially the same as the embodiment of FIG. 6 except that operation S111 is added between operations S 110 and S120 and operation S161 is added between operations S160 and S170. Therefore, the same operations will not be redundantly described and only added operations S111 and S161 will be described herein.

After receiving a connection possible signal (operation S1 10), the first communication terminal 300-1 may establish wireless communication with the specific measuring device 200. After a wireless communication connection with the specific measuring device 200 is completed, the first communication terminal 300-1 may transmit a connection completion signal to the measuring device connection management server 400. Here, the "connection completion signal" is a signal indicating the completion of a wireless communication connection with the specific measuring device 200. An actual wireless communication connection may fail due to various technical problems such as a battery discharge, a wireless communication protocol error, etc. when a wireless communication connection is attempted. Accordingly, the first communication terminal 300-1 may transmit a "connection completion signal" to report the stable completion of actual wireless communication between the first communication terminal 300-1 and the specific measuring device 200.

In this case, when the connection completion signal is received from the first communication terminal 300-1, the controller of the measuring device connection management server 400 may update the measuring device connection state information with information about the first communication terminal 300-1. In addition, when the connection possible signal is transmitted and the connection completion signal is not received for a preset response time, the controller of the measuring device connection management server 400 may determine that there is no wireless communication connection between the first communication terminal 300-1 and the specific measuring device 200 and thus may not update the measuring device connection state information.

Operation S161 is the same as operation S111 except that the connection completion signal is transmitted between the second communication terminal 300-2 and the measuring device connection management server 400.

Meanwhile, it is assumed that the second communication terminal 300-2 attempts to be wirelessly connected while a test related to the user of the first communication terminal 300-1 is being conducted by the specific measuring device 200. As described above, in the embodiment illustrated in FIG. 6, when the specific measuring device 200 is in use, the first communication terminal 300-1 may reject a disconnection request when the disconnection request signal is received (S140). Alternatively, the measuring device connection management server 400 may determine whether the specific measuring device 200 is in use and reject a request to connect to the second communication terminal 300-2 without intervention of the first communication terminal 300-1.

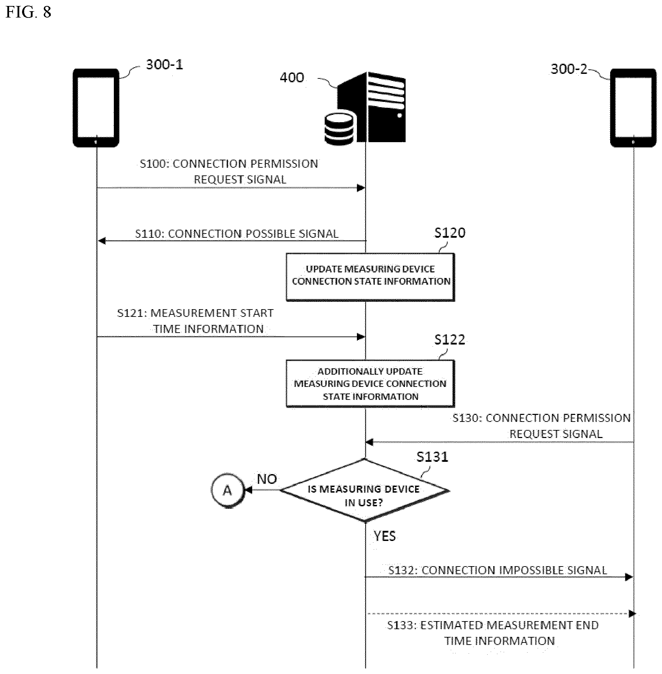

FIG. 8 is a diagram illustrating the flow of signals in a measuring device connection management method according to a third embodiment of the present disclosure.

Referring to FIG. 8, operations 110 to 120 are the same as those in the embodiment shown in FIG. 6. Next, in operation S121, the first communication terminal 300-1 may transmit measurement start time information or estimated measurement end time information to the measuring device connection management server 400. Measurement does not start as soon as wireless communication is established between a communication terminal and a measuring device. An actual user may put an actual test tube into the measuring device 200 after a predetermined time for collecting a sample and processing a buffer solution. In this case, the first communication terminal 300-1 may set the time when "start measurement" is input as the "measurement start time information." Alternatively, the first communication terminal 300-1 may set the estimated measurement end time information as the time after a preset estimated measurement time (e.g., 30 minutes) elapses from the time when "start a measurement" is input.

In operation S122, when information about a measurement start time or estimated measurement end time is received, the controller of the measuring device connection management server 400 may update the measuring device connection state information with the received data. When the "measurement start time information" is received, the controller of the measuring device connection management server 400 may calculate an estimated measurement end time after a preset estimated measurement time (e.g., 30 minutes) from the measurement start time, and include the estimated measurement end time into the measuring device connection state information.

Thereafter, in operation S130, the second communication terminal 300-2 may transmit a connection permission request signal. In this case, in operation S131, the controller of the measuring device connection management server 400 may determine whether the connection permission request signal is received from the second communication terminal 300-2 before a preset operation time from the measurement start time of the first communication terminal 300-1 or the estimated measurement end time, which is included in the measuring device connection state information. That is, whether the specific measuring device 200 is in use or not may be determined.

When the specific measuring device 200 is not in use ("NO" in operation S131), a wireless communication connection of the second communication terminal 300-2 may established according to operations S140 to S170 described above with reference to FIG. 6 ("A" in FIG. 8). In operation S132, when the measuring device 200 is in use ("YES" in operation S131), the controller of the measuring device connection management server 400 may transmit a connection impossible signal to the second communication terminal 300-2. Here, the connection impossible signal is a response signal to the connection permission request signal and indicates that connection to the specific measuring device 200 is impossible.

Preferably, the controller of the measuring device connection management server 400 may further transmit the measurement start time or estimated measurement end time information of the first communication terminal 300-1 to the second communication terminal 300-2 (operation S133). Thus, the second communication terminal 300-2 may attempt a wireless communication connection again after the estimated measurement end time.

Meanwhile, in the embodiment of FIG. 6, the first communication terminal 300-1 receiving a disconnection request transmits a response signal. However, when the user of the first communication terminal 300-1 fails to check a notification, the first communication terminal 300-1 may not be capable of transmitting the response signal due to various causes, e.g., when the first communication terminal 300-1 is turned off or due to a communication network failure.

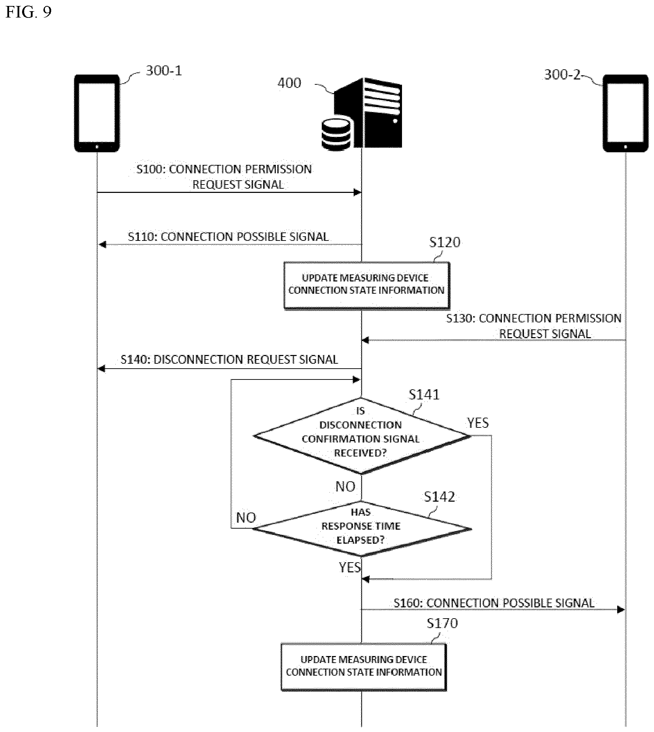

FIG. 9 is a diagram illustrating the flow of signals in a measuring device connection management method according to a fourth embodiment of the present disclosure.

Referring to FIG. 9, operations 110 to 140 are the same as those in the embodiment shown in FIG. 6 and thus are not redundantly described here, and FIG. 9 will be described starting from operation S141. In operation S141, the controller of the measuring device connection management server 400 may determine whether a disconnection confirmation signal is received from the first communication terminal 300-1. When the disconnection confirmation signal is received from the first communication terminal 300-1 ("YES" in operation S141), the controller of the measuring device connection management server 400 may proceed to operation S160. Operations S160 and S170 have been described above with reference to FIG. 6 and thus are not redundantly described here. On the other hand, when the disconnection confirmation signal is not received from the first communication terminal 300-1 ("NO" in operation S141), the controller of the measuring device connection management server 400 may proceed to operation S142.

In operation S142, the controller of the measuring device connection management server 400 may determine whether a preset response time has elapsed. When the response time has not elapsed ("NO" in operation S142), the controller of the measuring device connection management server 400 may proceed to operation S141. Accordingly, operations S141 and S142 may be repeatedly performed before the response time elapses. When the response time has elapsed ("YES" in operation S142), the controller of the measuring device connection management server 400 may proceed to operation S160. Operations S160 and S170 have been described above with reference to FIG. 6 and thus are not redundantly described here.

Meanwhile, in the embodiments described above with reference to FIGS. 6 to 9, access authority of the second communication terminal 300-2 has not been described. When use of the specific measuring device 200 is limited to only users belonging to a specific group, it is necessary to limit a wireless connection of users who do not belong to the group.

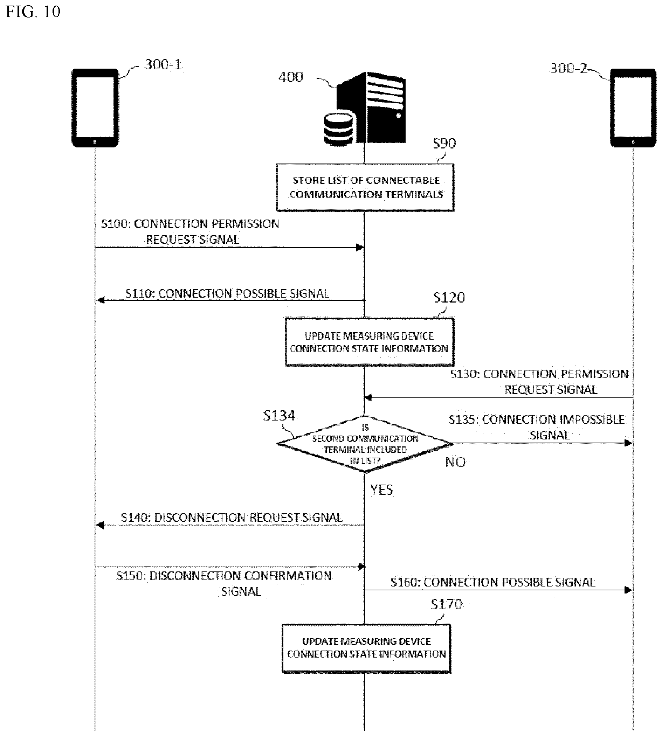

FIG. 10 is a diagram illustrating the flow of signals in a measuring device connection management method according to a fifth embodiment of the present disclosure.

Referring to FIG. 10, in operation S90, a controller of a measuring device connection management server 400 may store a list of connectable communication terminals, which is information about communication terminals capable of being connected to the specific measuring device 200. Operations S100 to S120 are as described above with reference to FIG. 6 and thus are not redundantly described here. It is assumed that the first communication terminal 300-1 is included in the list of connectable communication terminals.

Thereafter, in operation S130, the controller of the measuring device connection management server 400 may receive a connection permission request signal from the second communication terminal 300-2. Next, in operation S134, the controller of the measuring device connection management server 400 may determine whether the second communication terminal 300-2 is included in the list of connectable communication terminals. When the second communication terminal 300-2 is not included in the list of connectable communication terminals ("NO" in operation S134), the controller of the measuring device connection management server 400 may transmit a "connection impossible signal to the second communication terminal 300-2 (operation S135). In contrast, when the second communication terminal 300-2 is included in the list of connectable communication terminals ("YES" in operation S134), the controller of the measuring device connection management server 400 may proceed to operation S140. Operations S140 to S170 are as described above with reference to FIG. 6 and thus are not redundantly described here.

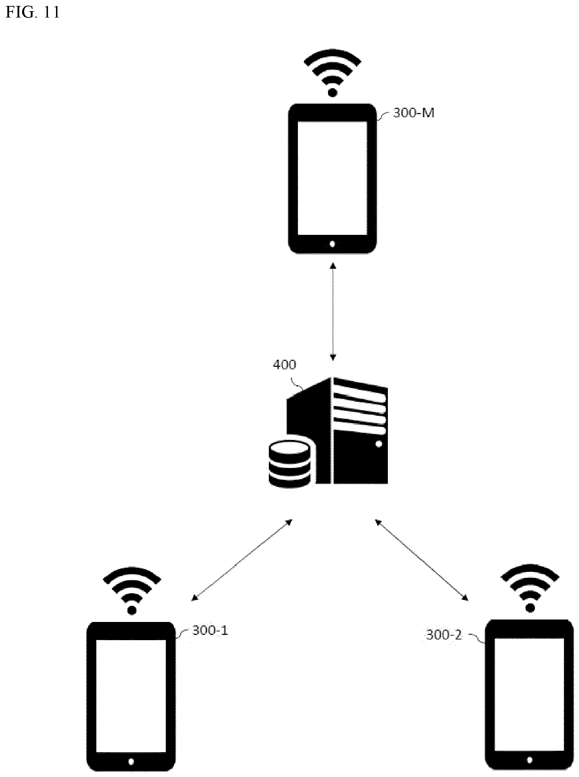

FIG. 11 is a schematic block diagram of a measuring device connection management system according to another embodiment of the present disclosure.

Referring to FIG. 11, the measuring device connection management system according to another embodiment of the present disclosure may include a first communication terminal 300-1, a second communication terminal 300-2, a measuring device connection management server 400, and a master communication terminal 300-M. The first communication terminal 300-1, the second communication terminal 300-2, and the measuring device connection management server 400 shown in FIG. 11 are the same as those shown in FIG. 5 and thus are not redundantly described here. The master communication terminal 300-M is the same as the communication terminal 300 described above with reference to FIG. 1. However, the master communication terminal 300-M is a communication terminal that is different from the first communication terminal 300-1 and the second communication terminal 300-2 described above and that has administrative authority for the specific measuring device 200. Accordingly, when a communication terminal attempts to connect to the specific measuring device 200, the master communication terminal 300-M may determine whether to permit the connection of the communication terminal.

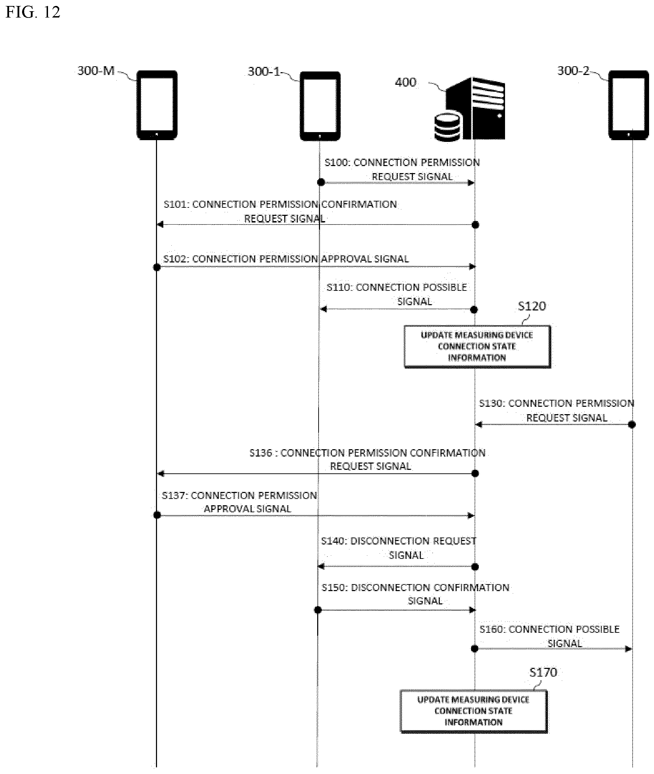

FIG. 12 is a diagram illustrating the flow of signals in a measuring device connection management method according to a sixth embodiment of the present disclosure.

Referring to FIG. 12, in operation S100, the first communication terminal 300-1 may transmit a connection permission request signal to the measuring device connection management server 400. Next, in operation S101, when a connection permission request signal is received from the first communication terminal 300-1, the controller of the measuring device connection management server 400 may transmit a connection permission confirmation request signal for the first communication terminal 300-1 to the master communication terminal 300-M. Here, the connection permission confirmation request signal is a signal transmitted to the master communication terminal 300-M to inquire whether to permit a wireless connection between a communication terminal and the specific measuring device 200. The connection permission confirmation request signal may include unique information for identifying the first communication terminal 300-1. Meanwhile, as shown in the example of FIG. 10, the controller of the measuring device connection management server 400 may proceed to operation S101 when the first communication terminal 300-1 is included in the list of connectable controller terminals.

In this case, the master communication terminal 300-M may determine whether to permit a wireless connection between the first communication terminal 300-1 and the specific measuring device 200. For example, the determination as to whether to permit the wireless connection may be input directly by a user of the master communication terminal 300-M. As another example, a memory of the master communication terminal 300-M may store information about a list of communication terminals capable of being connected to the measuring device 200 in advance. In this case, the master communication terminal 300-M may determine whether the first communication terminal 300-1 is a terminal included in the list. In operation S102, when the first communication terminal 300-1 is included in the list, the master communication terminal 300-M may transmit a connection permission approval signal for the first communication terminal 300-1 to the measuring device connection management server 400.

When the connection permission approval signal for the first communication terminal 300-1 is received from the master communication terminal 300-M, the controller of the measuring device connection management server 400 may transmit the connection possible signal to the first communication terminal 300-1 (operation S110).

Next, in operation S120, the controller of the measuring device connection management server 400 may update measuring device connection state information with information about the first communication terminal 300-1. Next, in operation S130, the second communication terminal 300-2 may transmit the connection permission request signal to the measuring device connection management server 400.

In operation S136, when the connection permission request signal is received from the second communication terminal 300-2, the controller of the measuring device connection management server 400 may transmit a connection permission confirmation request signal for the second communication terminal 300-2 to the master communication terminal 300-M. Next, in operation S137, the master communication terminal 300-M may transmit a connection permission approval signal for the second communication terminal 300-2 to the measuring device connection management server 400. Meanwhile, as shown in the example of FIG. 10, the controller of the measuring device connection management server 400 may proceed to operation S136 when the second communication terminal 300-1 is included in the list of connectable controller terminals.

In operation S140, when the connection permission approval signal for the second communication terminal 300-2 is received from the master communication terminal 300-M, the controller of the measuring device connection management server 400 may transmit the disconnection request signal to the first communication terminal 300-1. In this case, the first communication terminal 300-1 may cancel the wireless connection with the measuring device 200, and transmit the disconnection confirmation signal to the measuring device connection management server 400 in operation S150. In operation S160, when the disconnection confirmation signal is received from the first communication terminal 300-1, the controller of the measuring device connection management server 400 may transmit the connection possible signal to the second communication terminal 300-2. Then, in operation S170, the controller of the measuring device connection management server 400 may update the measuring device connection state information with information about the second communication terminal 300-2.

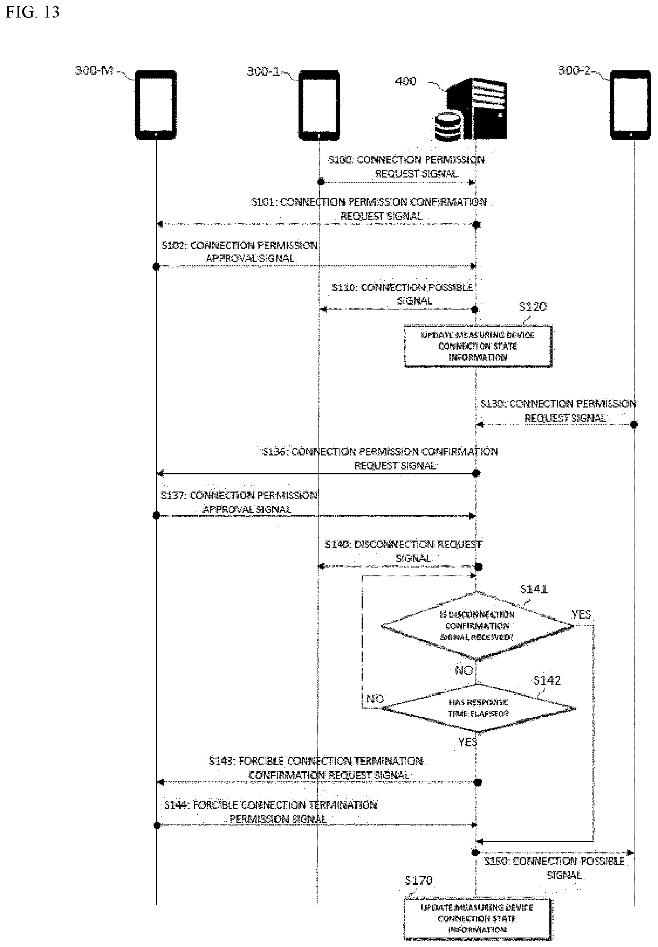

FIG. 13 is a diagram illustrating the flow of signals in a measuring device connection management method according to a seventh embodiment of the present disclosure.

Referring to FIG. 13, operations S100 to S140 are as described above with reference to FIG. 12. However, in the embodiment shown in FIG. 13, a response signal is not transmitted from the first communication terminal 300-1 receiving a disconnection request signal as in the embodiment of FIG. 9 described above.

In operation S141, the controller of the measuring device connection management server 400 may determine whether a disconnection confirmation signal is received from the first communication terminal 300-1. When the disconnection confirmation signal is received from the first communication terminal 300-1 ("YES" in operation S141), the controller of the measuring device connection management server 400 may proceed to operation S160. Operations S160 and S170 have been described above with reference to FIG. 6 and thus are not redundantly described here. On the other hand, when the disconnection confirmation signal is not received from the first communication terminal 300-1 ("NO" in operation S141), the controller of the measuring device connection management server 400 may proceed to operation S142.

In operation S142, the controller of the measuring device connection management server 400 may determine whether a preset response time has elapsed. When the response time has not elapsed ("NO" in operation S142), the controller of the measuring device connection management server 400 may proceed to operation S141. Accordingly, operations S141 and S142 may be repeatedly performed before the response time elapses. On the other hand, when the response time has elapsed ("YES" in operation S142), the controller of the measuring device connection management server 400 may perform operation S143.

In operation S143, the controller of the measuring device connection management server 400 may transmit a forcible connection termination confirmation request signal for the first communication terminal 300-1 to the master communication terminal 300-M. Here, the forcible connection termination confirmation request signal is an information signal informing the master communication terminal 300-M that the disconnection confirmation signal is not received from the first communication terminal 300-1. In this case, the master communication terminal 300-M may determine whether to forcibly cancel the connection of the first communication terminal 300-1. For example, the determination as to whether to forcibly disconnect the connection of the first communication terminal 300-1 may be input directly by the user of the master communication terminal 300-M. As another example, whether to forcibly disconnect the connection of the first communication terminal 300-1 may be determined in consideration of information (e.g., estimated measurement end time) that is related to whether the specific measuring device 200 is in use and that is stored in the memory of the master communication terminal 300-M. In this case, the master communication terminal 300-M may not allow the connection of the first communication terminal 300-1 to be forcibly disconnected when the time point of receiving the forcible connection termination confirmation request signal is earlier than the estimated measurement end time. On the other hand, when there is no condition that prevents the connection of the first communication terminal 300-1 from being forcibly disconnected, the master communication terminal 300-M may transmit a forcible connection termination permission signal for the first communication terminal 300-1 to the measuring device connection management server 400 (operation S144). Operations S160 and S170 are as described above with reference to FIG. 6 and thus are not redundantly described here.

Meanwhile, the embodiments of FIGS. 6 to 10, 12 and 13 have been described separately from each other to help the understanding of the embodiments and thus a measuring device connection management method according to the present disclosure is not limited thereto. Each of the embodiments may be implemented independently, and two or more of the embodiments may be combined to form another embodiment when needed. In particular, the embodiments of FIGS. 7, 8, and 10 may be combined with the embodiments of FIGS. 12 and 13 including the master communication terminal 300-M. In the embodiments described above with reference to FIGS. 6 to 10, 12 and 13, a case in which the connection permission request signal is received from the second communication terminal 300-2 is not taken into account until measuring device connection state information is updated (S200) starting from the receipt of the connection permission request signal from the first communication terminal 300-1 (S100). In this case, the controller of the measuring device connection management server 400 may maintain the processing of the connection permission request signal received from the second communication terminal (S130) in a queue until the processing of the connection permission request signal received earlier from the first communication terminal 300-1 (S100) is completed.

A measuring device connection management method according to the present disclosure may be implemented in the form of a computer program written to perform operations included in the method and recorded on a computer-readable recording medium.

In this case, the computer program may include code written in a computer language, such as C/C++, C#, JAVA, Python, or machine language, which is readable by a processor (CPU) of the computer through a device interface of the computer, to allow the computer to read the computer program and perform the methods implemented as the computer program. The code may include functional code related to functions that define functions necessary for performing the methods, and control code related to an execution procedure necessary for the processor of the computer to perform the functions according to the execution procedure. The code may further include additional information necessary for the processor of the computer to perform the functions or memory-reference-related code indicating a location (address) in the computer or on an external memory to be referenced by media. When there is a need for the processor of the computer to communicate with another computer or a server at a remote place so as to perform the functions, the code may further include communication-related code indicating how to communicate with another computer or a server at a remote place using a communication module of the computer, information or media to be transmitted or received during communication, and the like.

The medium in which the program is stored should be understood to mean a medium, e.g., a register, a cache, or a memory, that does not store data for a short time but stores data semi-permanently and that is readable by devices. Specifically, examples of the medium include a read-only memory (ROM), a random-access memory (RAM), a compact disc read-only memory (CD-ROM), a magnetic tape, a floppy disk, an optical data storage device, etc. but are not limited thereto. That is, the program may be stored in various types of recording media in various types of servers accessible by the computer or various types of recording media in the computer of a user. In addition, the medium may be distributed to computer systems connected via a network and store code readable by computers in a distributed method.

According to the present disclosure, management may be performed to safely cancel a wireless connection of a communication terminal connected earlier and thereafter allow a wireless connection of a subsequent communication terminal.

According to another aspect of the present disclosure, when a measuring device is being used through a communication terminal connected earlier, other communication terminals can be managed so as not to be connected to the measuring device, thereby ensuring stable use of the measuring device.

According to another aspect of the present disclosure, it is possible to manage only communication terminals registered in advance in a list so as to be connected to the measuring device.

According to another aspect of the present disclosure, it is possible to manage whether to allow the connection of a communication terminal, which attempts to connect wirelessly to a measuring device, through a master communication terminal with administrative authority.

Effects of the present disclosure are not limited thereto and other effects that are not described herein will be apparent to those of ordinary skill in the art from the following description.

While embodiments of the present disclosure have been described above with reference to the accompanying drawings, it will be obvious to those of ordinary skill in the art that the present disclosure may be embodied in many different forms without departing from the essential features thereof. Therefore, it should be understood that the embodiments described above are provided to be illustrative in all aspects and are not for purposes of limitation.

## Claims

1. A measuring device connection management method comprising:
(a) when a connection permission request signal for connecting to a measuring device through wireless communication is received from a first communication terminal, transmitting, by a controller, a connection possible signal to the first communication terminal and updating measuring device connection state information with information about the first communication terminal, the measuring device connection state information being information about a communication terminal connected to the measuring device through wireless communication;
(b) when the connection permission request signal for connecting to the measuring device through wireless communication is received from a second communication terminal, transmitting, by the controller, a disconnection request signal to the first communication terminal; and
(c) when a disconnection confirmation signal is received from the first communication terminal, transmitting, by the controller, the connection possible signal to the second communication terminal and updating the measuring device connection state information with information about the second communication terminal.

2. The method of claim 1, wherein (a) comprises updating, by the controller, the measuring device connection state information with the information about the first communication terminal when a connection completion signal is received from the first communication terminal, and
(c) comprises updating, by the controller, the measuring device connection state information with the information about the second communication terminal when a connection completion signal is received from the second communication terminal.

3. The method of claim 1 or 2, wherein (a) further comprises receiving, by the controller, information about a measurement start time or an estimated measurement end time from the first communication terminal and updating the measuring device connection state information with the received information.

4. The method of any one of claims 1 to 3, wherein (b) comprises transmitting, by the controller, a connection impossible signal to the second communication terminal when the connection permission request signal for connecting to the measuring device through wireless communication is received from the second communication terminal before a preset operation time elapses from a measurement start time of the first communication terminal or before the estimated measurement end time, which is included in the measuring device connection state information.

5. The method of any one of claims 1 to 4, wherein (b) further comprises transmitting, by the controller, measurement start time information of the first communication terminal or the estimated measurement end time information to the second communication terminal.

6. The method of any one of claims 1 to 5, wherein, when the disconnection confirmation signal is not received within a preset response time, (c) comprises transmitting, by the controller, the connection possible signal to the second communication terminal and updating the measuring device connection state information with the information about the second communication terminal.

7. The method of any one of claims 1 to 6, further comprising, before (a), storing, by the controller, a list of connectable communication terminals, which is information about communication terminals connectable to the measuring device, and
wherein, when the connection permission request signal for connecting to the measuring device through wireless communication is received from the second communication terminal, (b) comprises determining, by the controller, whether the second communication terminal is included in the list of connectable communication terminals and transmitting the disconnection request signal to the first communication terminal when the second communication terminal is included in the list of connectable communication terminals.

8. The method of any one of claims 1 to 7, wherein, (a) comprises transmitting, by the controller, a connection permission confirmation request signal for the first communication terminal to a master communication terminal when the connection permission request signal for connecting to the measuring device through wireless communication is received from the first communication terminal, and transmitting the connection possible signal to the first communication terminal when a connection permission approval signal for the first communication terminal is received from the master communication terminal, and
(b) comprises transmitting, by the controller, a connection permission confirmation request signal for the second communication terminal to the master communication terminal when the connection permission request signal for connecting to the measuring device through wireless communication is received from the second communication terminal, and transmitting a disconnection request signal to the first communication terminal when a connection permission approval signal for the second communication terminal is received from the master communication terminal.

9. The method of any one of claims 1 to 8, wherein (c) comprises transmitting, by the controller, a forcible connection termination confirmation request signal for the first communication terminal to the master communication terminal when the disconnection confirmation signal is not received from the first communication terminal within a preset response time, and transmitting the connection possible signal to the second communication terminal and updating the measuring device connection state information with the information about the second communication terminal when a forcible connection termination permission signal is received from the master communication terminal.

10. A computer program for performing operations of the measuring device connection management method of any one of claims 1 to 9 in a computer and recorded on a computer-readable recording medium.

11. A measuring device connection management server comprising:
a memory storing measuring device connection state information, which is information about a communication terminal connected to a measuring device through wireless communication; and
a controller configured to transmit a connection possible signal to a first communication terminal and update measuring device connection state information with information about the first communication terminal when a connection permission request signal for connecting to the measuring device through wireless communication is received from the first communication terminal, transmit a disconnection request signal to the first communication terminal when the connection permission request signal is received from a second communication terminal, and transmit the connection possible signal to the second communication terminal and update the measuring device connection state information with information about the second communication terminal when a disconnection confirmation signal is received from the first communication terminal.

## Patentansprüche

1. Verfahren zur Verwaltung einer Verbindung mit einer Messvorrichtung, umfassend:
(a) wenn ein Verbindungserlaubnisanfragesignal zur Verbindung mit einer Messvorrichtung über eine drahtlose Verbindung von einem ersten Kommunikationsendgerät stammend empfangen wird, Übertragen eines Verbindung-möglich-Signals an das erste Kommunikationsendgerät und Aktualisieren von Messvorrichtungsverbindungszustandsinformationen mit Informationen zu dem ersten Kommunikationsendgerät durch eine Steuerung, wobei es sich bei den Messvorrichtungsverbindungszustandsinformationen um Informationen zu einem Kommunikationsendgerät handelt, das über eine drahtlose Verbindung mit der Messvorrichtung verbunden ist;
(b) wenn das Verbindungserlaubnisanfragesignal zur Verbindung mit der Messvorrichtung über eine drahtlose Verbindung von einem zweiten Kommunikationsendgerät stammend empfangen wird, Übertragen eines Verbindungstrennungsanfragesignals an das erste Kommunikationsendgerät durch die Steuerung; und
c) wenn ein Verbindungstrennungsbestätigungssignal von dem ersten Kommunikationsendgerät stammend empfangen wird, Übertragen des Verbindung-möglich-Signals an das zweite Kommunikationsendgerät und Aktualisieren der Messvorrichtungsverbindungszustandsinformationen mit Informationen zu dem zweiten Kommunikationsendgerät durch die Steuerung.

2. Verfahren nach Anspruch 1, wobei (a) Folgendes umfasst: Aktualisieren der Messvorrichtungsverbindungszustandsinformationen mit den Informationen zu dem ersten Kommunikationsendgerät durch die Steuerung, wenn ein Verbindung-hergestellt-Signal von dem ersten Kommunikationsendgerät stammend empfangen wird, und
(c) Folgendes umfasst: Aktualisieren der Messvorrichtungsverbindungszustandsinformationen mit den Informationen zu dem zweiten Kommunikationsendgerät durch die Steuerung, wenn ein Verbindung-hergestellt-Signal von dem zweiten Kommunikationsendgerät stammend empfangen wird.

3. Verfahren nach Anspruch 1 oder 2, wobei (a) des Weiteren Folgendes umfasst: Empfangen von von dem ersten Kommunikationsendgerät stammenden Informationen zu einer Messungsstartzeit oder einer geschätzten Messungsendzeit und Aktualisieren der Messvorrichtungsverbindungszustandsinformationen mit den erhaltenen Informationen durch die Steuerung.

4. Verfahren nach einem der Ansprüche 1 bis 3, wobei (b) Folgendes umfasst: Übertragen eines Verbindung-nicht-möglich-Signals an das zweite Kommunikationsendgerät durch die Steuerung, wenn das von dem zweiten Kommunikationsendgerät stammende Verbindungserlaubnisanfragesignal zur Verbindung mit der Messvorrichtung über eine drahtlose Verbindung vor Ablauf einer voreingestellten Betriebsdauer ab einer Messungsstartzeit des ersten Kommunikationsendgeräts oder vor der geschätzten Messungsendzeit, die in den Messvorrichtungsverbindungszustandsinformationen enthalten ist, empfangen wird.

5. Verfahren nach einem der Ansprüche 1 bis 4, wobei (b) des Weiteren Folgendes umfasst: Übertragen von Messungsstartzeitinformationen des ersten Kommunikationsendgeräts oder der geschätzten Messungsendzeitinformationen an das zweite Kommunikationsendgerät durch die Steuerung.

6. Verfahren nach einem der Ansprüche 1 bis 5, wobei, wenn das Verbindungstrennungsbestätigungssignal nicht innerhalb einer voreingestellten Antwortzeit empfangen wird, (c) Folgendes umfasst: Übertragen des Verbindung-möglich-Signals an das zweite Kommunikationsendgerät und Aktualisieren der Messvorrichtungsverbindungszustandsinformationen mit den Informationen zu dem zweiten Kommunikationsendgerät durch die Steuerung.

7. Verfahren nach einem der Ansprüche 1 bis 6, des Weiteren umfassend: vor (a) Speichern einer Liste von verbindbaren Kommunikationsendgeräten, bei welcher es sich um Informationen zu mit der Messvorrichtung verbindbaren Kommunikationsendgeräten handelt, durch die Steuerung; und
wobei, wenn das von dem zweiten Kommunikationsendgerät stammende Verbindungserlaubnisanfragesignal zur Verbindung mit der Messvorrichtung über eine drahtlose Verbindung empfangen wird, (b) Folgendes umfasst: Bestimmen, ob das zweite Kommunikationsendgerät in der Liste verbindbarer Kommunikationsendgeräten erhalten ist, und Übertragen des Verbindungstrennungsanfragesignals an das erste Kommunikationsendgerät, wenn das zweite Kommunikationsendgerät in der Liste verbindbarer Kommunikationsendgeräte enthalten ist, durch die Steuerung.

8. Verfahren nach einem der Ansprüche 1 bis 7, wobei, (a) Folgendes umfasst: Übertragen eines Verbindungserlaubnisbestätigungsanfragesignals für das erste Kommunikationsendgerät an ein Master-Kommunikationsendgerät, wenn das von dem ersten Kommunikationsendgerät stammende Verbindungserlaubnisanfragesignal zur Verbindung mit der Messvorrichtung über eine drahtlose Verbindung empfangen wird, und Übertragen des Verbindung-möglich-Signals an das erste Kommunikationsendgerät, wenn ein Verbindungserlaubnisbestätigungssignal für das erste Kommunikationsendgerät von dem Master-Kommunikationsendgerät stammend empfangen wird, durch die Steuerung; und
(b) Folgendes umfasst: Übertragen eines Verbindungserlaubnisbestätigungsanfragesignals für das zweite Kommunikationsendgerät an das Master-Kommunikationsendgerät, wenn das von dem zweiten Kommunikationsendgerät stammende Verbindungserlaubnisanfragesignal zur Verbindung mit der Messvorrichtung über eine drahtlose Verbindung empfangen wird, und Übertragen eines Verbindungstrennungsanfragesignal an das erste Kommunikationsendgerät, wenn ein Verbindungserlaubnisbestätigungssignal für das zweite Kommunikationsendgerät von dem Master-Kommunikationsendgerät stammend empfangen wird, durch die Steuerung.

9. Verfahren nach einem der Ansprüche 1 bis 8, wobei (c) Folgendes umfasst: Übertragen eines Verbindungszwangstrennungsbestätigungsanfragesignals für das erste Kommunikationsendgerät an das Master-Kommunikationsendgerät, wenn das von dem Kommunikationsendgerät stammende Verbindungstrennungsbestätigungssignal nicht innerhalb einer voreingestellten Antwortzeit empfangen wird, und Übertragen des Verbindung-möglich-Signals an das zweite Kommunikationsendgerät und Aktualisieren der Messvorrichtungsverbindungszustandsinformationen mit den Informationen zu dem zweiten Kommunikationsendgerät, wenn ein Verbindungszwangsabbrucherlaubnissignal von dem Master-Kommunikationsendgerät stammend empfangen wird, durch die Steuerung.

10. Computerprogramm zur Durchführung von Schritten des Verfahrens zur Verwaltung einer Verbindung mit einer Messvorrichtung nach einem der Ansprüche 1 bis 9 in einem Computer, gespeichert auf einem computerlesbaren Speichermedium.

11. Server zur Verwaltung einer Verbindung mit einer Messvorrichtung, umfassend: einen Speicher, der Messvorrichtungsverbindungszustandsinformationen speichert, bei denen es sich um Informationen zu einem Kommunikationsendgerät handelt, das über eine drahtlose Verbindung mit der Messvorrichtung verbunden ist; und eine Steuerung zum Übertragen eines Verbindung-möglich-Signals an ein erstes Kommunikationsendgerät und zum Aktualisieren von Messvorrichtungsverbindungszustandsinformationen mit Informationen zu dem ersten Kommunikationsendgerät, wenn ein Verbindungserlaubnisanfragesignal zur Verbindung mit der Messvorrichtung über eine drahtlose Verbindung von dem ersten Kommunikationsendgerät stammend empfangen wird, Übertragen eines Verbindungstrennungsanfragesignals an das erste Kommunikationsendgerät, wenn das Verbindungserlaubnisanfragesignal von einem zweiten Kommunikationsendgerät stammend empfangen wird, und Übertragen des Verbindung-möglich-Signals an das zweite Kommunikationsendgerät und Aktualisieren der Messvorrichtungsverbindungszustandsinformationen mit Informationen zu dem zweiten Kommunikationsendgerät, wenn ein Verbindungstrennungsbestätigungssignal von dem ersten Kommunikationsendgerät stammend empfangen wird.

## Revendications

1. Procédé de gestion de connexion de dispositif de mesure, le procédé comprenant les étapes consistant à :
(a) quand un signal de requête d'autorisation de connexion pour connecter à un dispositif de mesure par communication sans fil est reçu d'un premier terminal de communication, transmettre, par un contrôleur, un signal connexion possible au premier terminal de communication et actualiser des informations d'état de connexion de dispositif de mesure avec des informations sur le premier terminal de communication, les informations d'état de connexion de dispositif de mesure étant des informations sur un terminal de communication connecté au dispositif de mesure par communication sans fil ;
(b) quand le signal de requête d'autorisation de connexion pour connecter au dispositif de mesure par communication sans fil est reçu d'un deuxième terminal de communication, transmettre, par le contrôleur, un signal de requête de déconnexion au premier terminal de communication ; et
c) quand un signal de confirmation de déconnexion est reçu du premier terminal de communication, transmettre, par le contrôleur, le signal connexion possible au deuxième terminal de communication et actualiser les informations d'état de connexion de dispositif de mesure avec des informations sur le deuxième terminal de communication.

2. Procédé selon la revendication 1, dans lequel (a) comprend l'étape consistant à actualiser, par le contrôleur, les informations d'état de connexion de dispositif de mesure avec les informations sur le premier terminal de communication quand un signal de complètement de connexion est reçu du premier terminal de communication, et
(c) comprend l'étape consistant à actualiser, par le contrôleur, les informations d'état de connexion de dispositif de mesure avec les informations sur le deuxième terminal de communication quand un signal de complètement de connexion est reçu du deuxième terminal de communication.

3. Procédé selon la revendication 1 ou 2, dans lequel (a) comprend en outre les étapes consistant à recevoir, par le contrôleur, des informations sur un temps de début de mesure ou un temps de fin de mesure estimé du premier terminal de communication et actualiser les informations d'état de connexion de dispositif de mesure avec les informations reçues.

4. Procédé selon l'une quelconque des revendications 1 à 3, dans lequel (b) comprend l'étape consistant à transmettre, par le contrôleur, un signal connexion impossible au deuxième terminal de communication quand le signal de requête d'autorisation de connexion pour connecter au dispositif de mesure par communication sans fil est reçu du deuxième terminal de communication avant l'écoulement d'un temps de fonctionnement prédéfini à partir d'un temps de début de mesure du premier terminal de communication ou avant le temps de fin de mesure estimé, qui est inclus dans les informations d'état de connexion de dispositif de mesure.

5. Procédé selon l'une quelconque des revendications 1 à 4, dans lequel (b) comprend en outre l'étape consistant à transmettre, par le contrôleur, des informations de temps de début de mesure du premier terminal de communication ou les informations de temps de fin de mesure estimé au deuxième terminal de communication.

6. Procédé selon l'une quelconque des revendications 1 à 5, dans lequel, quand le signal de confirmation de déconnexion n'est pas reçu dans un temps de réponse prédéfini, (c) comprend les étapes consistant à transmettre, par le contrôleur, le signal connexion possible au deuxième terminal de communication et actualiser les informations d'état de connexion de dispositif de mesure avec les informations sur le deuxième terminal de communication.

7. Procédé selon l'une quelconque des revendications 1 à 6, comprenant en outre, avant (a), l'étape consistant à enregistrer, par le contrôleur, une liste de terminaux de communication connectables, qui représente des informations sur des terminaux de communication connectables au dispositif de mesure, et
dans lequel, quand le signal de requête d'autorisation de connexion pour connecter au dispositif de mesure par communication sans fil est reçu du deuxième terminal de communication, (b) comprend les étapes consistant à déterminer, par le contrôleur, si le deuxième terminal de communication est inclus dans la liste de terminaux de communication connectables et transmettre le signal de requête de déconnexion au premier terminal de communication quand le deuxième terminal de communication est inclus dans la liste de terminaux de communication connectables.

8. Procédé selon l'une quelconque des revendications 1 à 7, dans lequel (a) comprend les étapes consistant à transmettre, par le contrôleur, un signal de requête de confirmation d'autorisation de connexion pour le premier terminal de communication à un terminal de communication maître quand le signal de requête d'autorisation de connexion pour connecter au dispositif de mesure par communication sans fil est reçu du premier terminal de communication et transmettre le signal connexion possible au premier terminal de communication quand un signal d'approbation d'autorisation de connexion pour le premier terminal de communication est reçu du terminal de communication maître, et
(b) comprend les étapes consistant à transmettre, par le contrôleur, un signal de requête de confirmation d'autorisation de connexion pour le deuxième terminal de communication au terminal de communication maître quand le signal de requête d'autorisation de connexion pour connecter au dispositif de mesure par communication sans fil est reçu du deuxième terminal de communication et transmettre un signal de requête de déconnexion au premier terminal de communication quand un signal d'approbation d'autorisation de connexion pour le deuxième terminal de communication est reçu du terminal de communication maître.

9. Procédé selon l'une quelconque des revendications 1 à 8, dans lequel (c) comprend les étapes consistant à transmettre, par le contrôleur, un signal de requête de confirmation de terminaison de connexion par force pour le premier terminal de communication au terminal de communication maître quand le signal de confirmation de déconnexion n'est pas reçu du premier terminal de communication dans un temps de réponse prédéfini et transmettre le signal connexion possible au deuxième terminal de communication et actualiser les informations d'état de connexion de dispositif de mesure avec les informations sur le deuxième terminal de communication quand un signal d'autorisation de terminaison de connexion par force est reçu du terminal de communication maître.

10. Programme informatique pour effectuer des opérations du procédé de gestion de connexion de dispositif de mesure selon l'une quelconque des revendications 1 à 9 dans un ordinateur et stocké sur un support de stockage lisible par ordinateur.

11. Serveur de gestion de connexion de dispositif de mesure comprenant :
une mémoire stockant des informations d'état de connexion de dispositif de mesure, qui sont des informations sur un terminal de communication connecté à un dispositif de mesure par communication sans fil ; et
un contrôleur configuré pour transmettre un signal connexion possible à un premier terminal de communication et actualiser des informations d'état de connexion de dispositif de mesure avec des informations sur le premier terminal de communication quand un signal de requête d'autorisation de connexion pour connecter au dispositif de mesure par communication sans fil est reçu du premier terminal de communication, transmettre un signal de requête de déconnexion au premier terminal de communication quand le signal de requête d'autorisation de connexion est reçu d'un deuxième terminal de communication et transmettre le signal connexion possible au deuxième terminal de communication et actualiser les informations d'état de connexion de dispositif de mesure avec des informations sur le deuxième terminal de communication quand un signal de confirmation de déconnexion est reçu du premier terminal de communication.
